# EUROPEAN PATENT APPLICATION

(11) **EP 4 325 340 A1**
(43) Date of publication of application: **21.02.2024**
(21) Application number: 22803732.1
(22) Date of filing: 21.04.2022
(51) Int. Cl.: G06F 3/04812

(54) **DISPLAY METHOD AND TERMINAL DEVICE**

(30) Priority: 19.05.2021 CN 202110548362; 13.09.2021 CN 202111067014
(71) Applicant: Huawei Technologies Co., Ltd., Shenzhen, Guangdong 518129 (CN)
(72) Inventor: MING, Fan, Shenzhen, Guangdong 518129 (CN); YAN, Meng, Shenzhen, Guangdong 518129 (CN)
(74) Representative: Maiwald GmbH
(86) International application number: PCT/CN2022/088174
(87) International publication number: WO 2022/242408

(57) **Abstract**

Embodiments of this application relate to a display method. The method is applied to an operating system of a terminal device, and a screen projection application and at least one other application are run on the terminal device. The terminal device is connected to an external display in a wired or wireless manner. The method includes: determining, according to a screen projection desktop generation request of the screen projection application, a screen projection desktop that includes an application interface and a mouse icon, where the screen projection desktop is displayed on the external display; and when the mouse icon is moved to the application interface, executing a corresponding hover effect on the screen projection desktop, and/or changing the mouse icon on the clickable application interface. In this application, when the mouse icon is moved to the application interface, it is determined whether the hover effect can be executed; and after it is determined that the hover effect can be executed, a corresponding hover effect is executed according to an interface type of the application interface, and/or a style of the mouse icon is changed, so that a user can more intuitively view a position to which a mouse is moved and a hot zone selected by the user by using the mouse, thereby enhancing visual experience of the user.

## Description

This application claims priorities to Chinese Patent Application No. 202110548362.4, filed with the China National Intellectual Property Administration on May 19, 2021 and entitled "METHOD FOR IMPLEMENTING HOVER EFFECT", and to Chinese Patent Application No. 202111067014.1, filed with the China National Intellectual Property Administration on September 13, 2021 and entitled "DISPLAY METHOD AND TERMINAL DEVICE", which are incorporated herein by reference in their entireties.

### TECHNICAL FIELD

This application relates to the field of electronic technologies, and in particular, to a hover effect display method and a terminal device in an intelligent recognition scenario.

### BACKGROUND

In all scenarios of multi-screen collaboration, an application of a terminal device such as a mobile phone may be generally migrated to a device that can be used for screen projection, for example, may be migrated to a device that can be used for screen projection, such as a display, a personal computer (personal computer, PC), or a television, so as to build a smart ecosystem of all scenarios.

Currently, most applications on a mobile phone are adaptively developed based on a finger touch form. However, when content displayed on the mobile phone is switched to a device that can be used for screen projection, because a display of such a device usually does not support a touch operation, a mouse is used to perform an operation. In this case, in terms of user experience, there is still a relatively large difference between a touch operation on a mobile phone end and a mouse operation on a display. For example, there is still a relatively large difference between effect display of a hot zone during finger touch and effect display of mouse sliding. The hot zone may be a text input area, a text click area, an image resource area output by a UI, or the like displayed on a mobile phone end or a display.

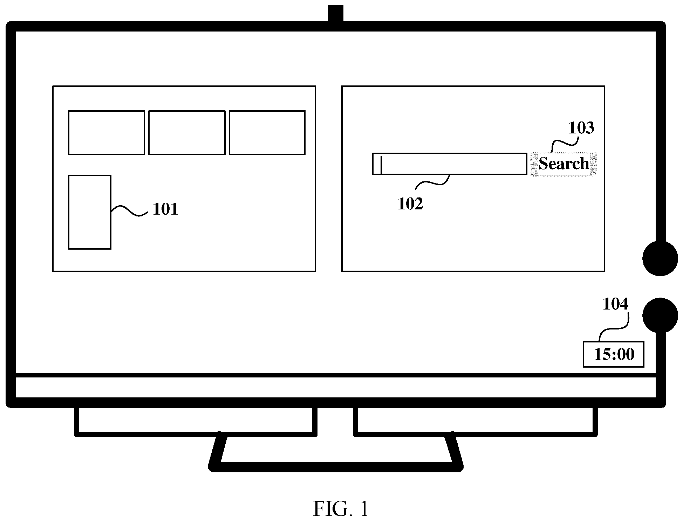

Most applications in a current mobile phone operating system do not produce a hover (hover) effect. The hover effect may be understood as that when a mouse icon is moved to a control, the control presents a specific style. For example, the specific style may be highlighting, local transparency, or the like. In this way, a user can intuitively view a position to which the current mouse icon is moved and an area that can be operated. As shown in FIG. 1, an image control 101, a text control 102, a button control 103, a time control 104, and the like may be included. Therefore, when the mobile phone performs display by using a device that can be used for screen projection and an operation is performed by using a mouse, most interfaces do not correspondingly change according to a position to which the mouse is moved, and a mouse style is relatively simple, resulting in poor visual experience of the user.

### SUMMARY

An embodiment of this application provides a display method. A terminal device is connected to an external display, and displays a screen projection desktop by using the external display. After a mouse icon on a screen projection desktop is moved to an application interface, a hover effect of the application interface may be determined and/or a style of the mouse icon may be changed. In the foregoing manner, a position to which a user moves a mouse and a hot zone selected by the user by using the mouse can be visually displayed more intuitively, thereby enhancing visual experience of the user.

According to a first aspect, a display method is provided. The method is applied to an operating system of a terminal device, and a screen projection application and at least one other application are run on the terminal device. It may be understood that the another application may be any application other than the screen projection application on the terminal device. The terminal device is connected to an external display in a wired or wireless manner. The method may include: determining a screen projection desktop according to a screen projection desktop generation request of the screen projection application, where the screen projection desktop includes an application interface and a mouse icon, and the application interface is an interface corresponding to any other application; sending, by using the screen projection application, the screen projection desktop to the external display for display; when the mouse icon is moved to the application interface, determining whether a hover effect can be executed on the application interface; when the hover effect can be executed on the application interface, determining an interface type of the application interface, and executing, on the screen projection desktop, a hover effect corresponding to the interface type; and/or when the hover effect can be executed on the application interface, changing the mouse icon on the clickable application interface. In this application, when the mouse icon is moved to the application interface, it is determined whether the hover effect can be executed; and after it is determined that the hover effect can be executed, the corresponding hover effect is executed according to the interface type of the application interface, and/or a style of the mouse icon is changed, so that a user can more intuitively view a position to which a mouse is moved and a hot zone selected by the user by using the mouse, thereby enhancing visual experience of the user.

In a possible implementation, the method may further include: generating configuration information of the application interface, where the configuration information may indicate whether the hover effect can be executed on the application interface; then recording the configuration information; and when the mouse icon is moved to the application interface again, executing, by the operating system, the hover effect corresponding to the interface type and/or change the mouse icon based on the configuration information. In this application, the configuration information is generated and recorded, so that the hover effect of the application interface and the style of the mouse icon can be quickly determined subsequently.

In a possible implementation, before the determining whether a hover effect can be executed on the application interface, the method may further include: obtaining the configuration information recorded last time; and when the configuration information indicates that the hover effect can be executed on the application interface, executing, on the screen projection desktop, the hover effect corresponding to the interface type, and/or changing the mouse icon on the clickable application interface. In this application, the hover effect of the application interface and the style of the mouse icon can be quickly determined based on historically stored configuration information.

In a possible implementation, the determining whether a hover effect can be executed on the application interface may include: obtaining an access parameter; and when the access parameter indicates that the application interface is accessible, determining that the hover effect can be executed on the application interface; and/or obtaining an enable parameter; and when the enable parameter indicates that the application interface is enabled, determining that the hover effect can be executed on the application interface; and/or obtaining a stub parameter; and when the stub parameter indicates that the application interface is not an invalid stub, determining that the hover effect can be executed on the application interface. In this application, the access parameter, the enable parameter, and/or the stub parameter are/is obtained to determine that the hover effect can be executed on the application interface, so as to avoid a case in which an error is reported or the application interface is suspended when the hover effect is executed on the application interface on which the hover effect cannot be executed.

In a possible implementation, the determining whether a hover effect can be executed on the application interface may further include: determining whether an area of the application interface is less than or equal to an area threshold; and when the area of the application interface is less than or equal to the area threshold, determining that the hover effect can be executed on the application interface. In this application, the area of the application interface is determined, so as to avoid deterioration of user experience when the hover effect is executed on an application interface with an excessively large area.

In a possible implementation, the determining whether a hover effect can be executed on the application interface may further include: determining whether the application interface is included in a preset first list, and/or determining whether the application interface is included in a preset second list; and when the application interface is included in the preset first list or the application interface is not included in the preset second list, determining that the hover effect can be executed on the application interface. In this application, a list may be further set to more effectively manage application interfaces on which a hover effect can be executed and application interfaces on which a hover effect cannot be executed.

In a possible implementation, the determining whether a hover effect can be executed on the application interface may include: when the interface type of the application interface is a non-text type, obtaining the enable parameter; when the enable parameter indicates that the application interface is enabled, determining whether the application interface is clickable, or determining whether the application interface is long-clickable, or determining whether the application interface is context-clickable, or determining whether a hover listener obtains listened data, or determining whether a touch listener obtains listened data, where the hover listener is configured to listen to a hover effect; and when the application interface is clickable, or the application interface is long-clickable, or the application interface is context-clickable, or the hover listener obtains the listened data, or the touch listener obtains the listened data, determining that the hover effect can be executed on the application interface. In this application, after the application interface is enabled, it may be further determined, by determining a click status of the application interface, whether the hover effect can be executed.

In a possible implementation, the determining whether a hover effect can be executed on the application interface may further include: when the interface type of the application interface is a text type, determining whether editing is performed on the application interface, and determining whether an input method manager is started on the application interface; when editing is not performed on the application interface or no input method manager is started on the application interface, determining whether a hyperlink used for jumping to a page exists on the application interface; and when no hyperlink used for jumping to a page exists on the application interface, determining that the hover effect can be executed on the application interface. In this application, corresponding determining may be further performed on the application interface of the text type, to determine whether the hover effect can be executed on the application interface.

In a possible implementation, the application interface includes at least one nested subinterface; and the determining whether a hover effect can be executed on the application interface may include: when a quantity of subinterfaces that can display the hover effect is greater than a preset threshold, determining that the hover effect can be executed on the subinterface, and executing the hover effect or changing the mouse icon on the subinterface; or when a quantity of subinterfaces that can display the hover effect is less than or equal to a preset threshold, determining that the hover effect can be executed on the application interface. In this application, when a plurality of layers of application interfaces are nested, it is dynamically determined, it may be determined, based on a quantity of nested subinterfaces on which the hover effect can be executed, whether the hover effect is implemented on the application interface or the hover effect is implemented on the subinterface, so that the user can more easily capture a position of a mouse from a visual angle, thereby improving visual experience of the user.

In a possible implementation, before the determining whether a hover effect can be executed on the application interface, the method may further include: obtaining a mode execution parameter; and when the mode execution parameter indicates that the hover effect can be executed in a preset mode, determining whether the hover effect can be executed on the application interface. In this application, a case in which the terminal device currently executes the hover effect in the preset mode may be further determined, to determine whether the hover effect can be executed on the application interface.

In a possible implementation, when the interface type is an image type, the executing the hover effect corresponding to the interface type may include: determining to display an image with first transparency; and/or determining to add a border around the image for display; and/or determining to add a mask to the image for display. This application provides a plurality of hover effects of an application interface of the image type, so as to ensure that in most cases, the user can intuitively and clearly view the position to which the mouse is moved and the hot zone selected by the user by using the mouse, thereby enhancing visual experience of the user.

In a possible implementation, when the interface type is the text type, the executing the hover effect corresponding to the interface type includes: determining a color, a font weight, a font size, a tilt angle, and/or an underline of a text on the application interface. This application provides a plurality of hover effects of an application interface of the text type, so as to ensure that in most cases, the user can intuitively and clearly view the position to which the mouse is moved and the hot zone selected by the user by using the mouse, thereby enhancing visual experience of the user.

In a possible implementation, the changing the mouse icon includes: replacing the mouse icon with a small hand icon. In this application, a style of the mouse icon may be further replaced, to enrich visual effects, so as to ensure that the user can intuitively and clearly view the position to which the mouse is moved and the hot zone selected by the user by using the mouse, thereby enhancing visual experience of the user.

According to a second aspect, a terminal device is provided. The terminal device includes an operating system, and a screen projection application and at least one other application are run in the operating system. It may be understood that the another application may be any application other than the screen projection application on the terminal device. The terminal device is connected to an external display in a wired or wireless manner. The terminal device includes: a processor, configured to be coupled to a memory, and read and execute instructions stored in the memory. When the processor runs, the instructions are executed, so that the processor is configured to: determine a screen projection desktop according to a screen projection desktop generation request of a screen projection application, where the screen projection desktop includes an application interface and a mouse icon, and the application interface is an interface corresponding to any other application; and send the screen projection desktop to the external display by using the screen projection application. The processor is further configured to: when the mouse icon is moved to the application interface, determine whether a hover effect can be executed on the application interface; when the hover effect can be executed on the application interface, determine an interface type of the application interface, and execute a hover effect corresponding to the interface type on the screen projection desktop; and/or when the hover effect can be executed on the application interface, change the mouse icon on the clickable application interface. In this application, when the mouse icon is moved to the application interface, it is determined whether the hover effect can be executed. After it is determined that the hover effect can be executed, the corresponding hover effect is executed according to the interface type of the application interface, and/or a style of the mouse icon is changed, so that a user can more intuitively view a position to which a mouse is moved and a hot zone selected by the user by using the mouse, thereby enhancing visual experience of the user.

In a possible implementation, the processor is further configured to: generate configuration information of the application interface, where the configuration information indicates whether the hover effect can be executed on the application interface; record the configuration information; and when the mouse icon is moved to the application interface again, the operating system executes the hover effect corresponding to the interface type and/or changes the mouse icon based on the configuration information. In this application, the configuration information is generated and recorded, so that the hover effect of the application interface and the style of the mouse icon can be quickly determined subsequently.

In a possible implementation, the processor is further configured to: obtain configuration information recorded last time; and when the configuration information indicates that the hover effect can be executed on the application interface, execute, on the screen projection desktop, the hover effect corresponding to the interface type, and/or change the mouse icon on the clickable application interface. In this application, the hover effect of the application interface and the style of the mouse icon can be quickly determined based on historically stored configuration information.

In a possible implementation, the processor is further configured to: obtain an access parameter; when the access parameter indicates that the application interface is accessible, determine that the hover effect can be executed on the application interface; and/or obtain an enable parameter; when the enable parameter indicates that the application interface is enabled, determine that the hover effect can be executed on the application interface; and/or obtain a stub parameter; and when the stub parameter indicates that the application interface is not an invalid stub, determine that the hover effect can be executed on the application interface. In this application, the access parameter, the enable parameter, and/or the stub parameter are/is obtained to determine that the hover effect can be executed on the application interface, so as to avoid a case in which an error is reported or the application interface is suspended when the hover effect is executed on the application interface on which the hover effect cannot be executed.

In a possible implementation, the processor is further configured to: determine whether an area of the application interface is less than or equal to an area threshold; and when the area of the application interface is less than or equal to the area threshold, determine that the hover effect can be executed on the application interface. In this application, the area of the application interface is determined, so as to avoid deterioration of user experience when the hover effect is executed on an application interface with an excessively large area.

In a possible implementation, the processor is further configured to: determine whether the application interface is included in a preset first list, and/or determine whether the application interface is included in a preset second list; and when the application interface is included in the preset first list or the application interface is not included in the preset second list, determine that the hover effect cannot be executed on the application interface. In this application, a list may be further set to more effectively manage application interfaces on which a hover effect can be executed and application interfaces on which a hover effect cannot be executed.

In a possible implementation, the processor is further configured to: when the interface type of the application interface is a non-text type, obtain the enable parameter; when the enable parameter indicates that the application interface is enabled, determine whether the application interface is clickable, or determine whether the application interface is long-clickable, or determine whether the application interface is context-clickable, or determine whether a hover listener obtains listened data, or determine whether a touch listener obtains listened data; and when the application interface is clickable, or the application interface is long-clickable, or the application interface is context-clickable, or the hover listener obtains the listened data, or the touch listener obtains the listened data, determine that the hover effect can be executed on the application interface. In this application, after the application interface is enabled, it may be further determined, by determining a click status of the application interface, whether the hover effect can be executed.

In a possible implementation, the processor is further configured to: when the interface type of the application interface is a text type, determine whether editing is performed on the application interface, and determine whether an input method manager is started on the application interface; when editing is not performed on the application interface or no input method manager is started on the application interface, determine whether a hyperlink used for jumping to a page exists on the application interface; and when no hyperlink used for jumping to a page exists on the application interface, determine that the hover effect can be executed on the application interface. In this application, corresponding determining may be further performed on the application interface of the text type, to determine whether the hover effect can be executed on the application interface.

In a possible implementation, the application interface includes at least one nested subinterface; and the processor is further configured to: when a quantity of subinterfaces that can display the hover effect is greater than a preset threshold, determine that the hover effect can be executed on the subinterface, and execute the hover effect or change the mouse icon on the subinterface; or when a quantity of subinterfaces that can display the hover effect is less than or equal to a preset threshold, determine that the hover effect can be executed on the application interface. In this application, when a plurality of layers of application interfaces are nested, it is dynamically determined, it may be determined, based on a quantity of nested subinterfaces on which the hover effect can be executed, whether the hover effect is implemented on the application interface or the hover effect is implemented on the subinterface, so that the user can more easily capture a position of a mouse from a visual angle, thereby improving visual experience of the user.

In a possible implementation, the processor is further configured to: obtain a mode execution parameter; and when the mode execution parameter indicates that the hover effect can be executed in a preset mode, determine whether the hover effect can be executed on the application interface. In this application, a case in which the terminal device currently executes the hover effect in the preset mode may be further determined, to determine whether the hover effect can be executed on the application interface.

In a possible implementation, when the interface type is an image type, the processor is further configured to: determine to display an image with first transparency; and/or determine to add a border around the image for display; and/or determine to add a mask to the image for display. This application provides a plurality of hover effects of an application interface of the image type, so as to ensure that in most cases, the user can intuitively and clearly view the position to which the mouse is moved and the hot zone selected by the user by using the mouse, thereby enhancing visual experience of the user.

In a possible implementation, when the interface type is the text type, the processor is further configured to determine a color, a font weight, a font size, a tilt angle, and/or an underline of a text on the application interface. This application provides a plurality of hover effects of an application interface of the text type, so as to ensure that in most cases, the user can intuitively and clearly view the position to which the mouse is moved and the hot zone selected by the user by using the mouse, thereby enhancing visual experience of the user.

In a possible implementation, the processor is further configured to replace the mouse icon with a small hand icon. In this application, a style of the mouse icon may be further replaced, to enrich visual effects, so as to ensure that the user can intuitively and clearly view the position to which the mouse is moved and the hot zone selected by the user by using the mouse, thereby enhancing visual experience of the user.

According to a third aspect, a computer-readable storage medium is provided. The computer-readable storage medium stores instructions, and when the instructions are run on a terminal, the terminal is enabled to perform the method according to any one of the first aspect or the possible implementations of the first aspect.

According to a fourth aspect, a computer device including instructions is provided. When the instructions are run on a terminal, the terminal is enabled to perform the method according to any one of the first aspect or the possible implementations of the first aspect.

According to a fifth aspect, a computer program product including instructions is provided. When the computer program product runs on a computer, the computer is enabled to perform the method according to any one of the first aspect or the possible implementations of the first aspect.

This application discloses a display method. After a mouse icon on a screen projection desktop is moved to an application interface, a hover effect of the application interface may be determined and/or a style of the mouse icon may be changed. In the foregoing manner, a user can get more intuitive visual impact, so that the user can clearly view a position to which a mouse is moved and a hot zone selected by the user by using the mouse, thereby enhancing visual experience of the user.

### BRIEF DESCRIPTION OF DRAWINGS

FIG. 1 is a schematic diagram of a control;
FIG. 2 is a schematic diagram of an application scenario according to an embodiment of this application;
FIG. 3 is a schematic diagram of an interface of an external display;
FIG. 4 is a schematic diagram of a display system architecture according to an embodiment of this application;
FIG. 5 is a flowchart of a display method according to an embodiment of this application;
FIG. 6 is a flowchart of another display method according to an embodiment of this application;
FIG. 7 is a schematic diagram of a display interface of an external display according to an embodiment of this application;
FIG. 8 is a flowchart of still another display method according to an embodiment of this application;
FIG. 9 is a schematic diagram of a hover effect according to an embodiment of this application;
FIG. 10 is a schematic diagram of another hover effect according to an embodiment of this application;
FIG. 11 is a schematic diagram of still another hover effect according to an embodiment of this application;
FIG. 12 is a schematic diagram of still another hover effect according to an embodiment of this application;
FIG. 13 is a schematic diagram of still another hover effect according to an embodiment of this application;
FIG. 14 is a schematic diagram of still another hover effect according to an embodiment of this application;
FIG. 15 is a schematic diagram of still another hover effect according to an embodiment of this application;
FIG. 16 is a schematic diagram of still another hover effect according to an embodiment of this application;
FIG. 17 is a schematic diagram of still another hover effect according to an embodiment of this application;
FIG. 18 is a schematic diagram of still another hover effect according to an embodiment of this application;
FIG. 19 is a flowchart of still another display method according to an embodiment of this application;
FIG. 20 is a schematic diagram of still another hover effect according to an embodiment of this application;
FIG. 21 is a schematic diagram of still another hover effect according to an embodiment of this application;
FIG. 22 is a schematic diagram of still another hover effect according to an embodiment of this application; and
FIG. 23 is a schematic diagram of a terminal device according to an embodiment of this application.

### DESCRIPTION OF EMBODIMENTS

The following describes technical solutions in embodiments of this application with reference to accompanying drawings in embodiments of this application.

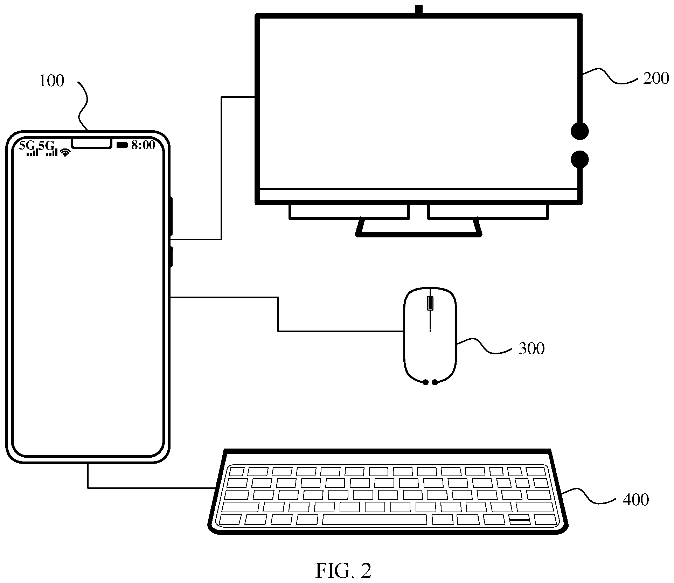

This application is mainly applied to a scenario in which a terminal device is connected to an external device (referred to as a peripheral). For example, as shown in FIG. 2, the terminal device 100 may be connected to a plurality of peripherals in a wired or wireless manner. The peripherals may include an external display 200, a mouse 300, a keyboard 400, and the like. Certainly, in some examples, the peripherals may further include a speaker, a camera, a handle, and any other peripheral.

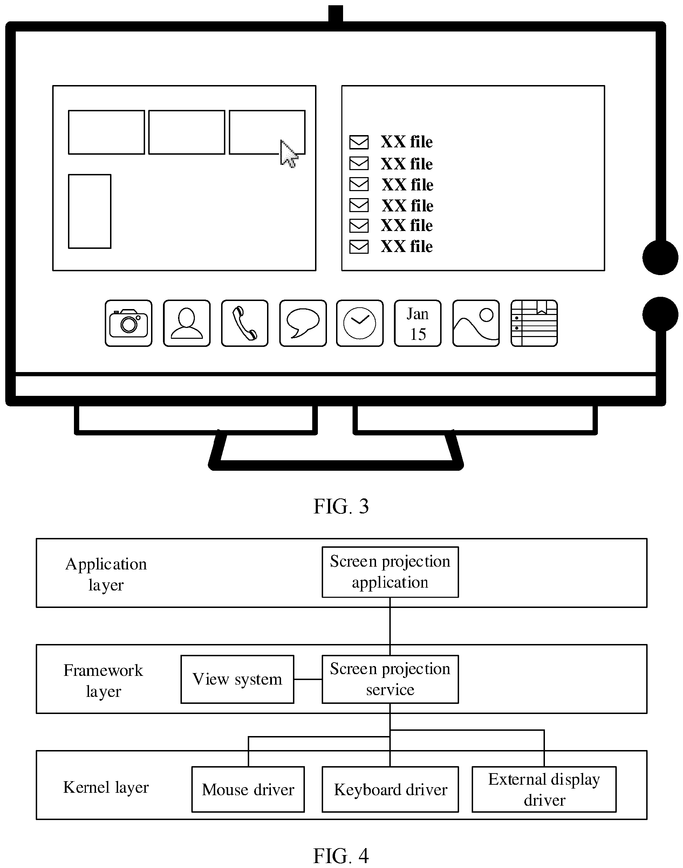

After the external display 200 is connected to the terminal device 100, an interface of the terminal device 100 may be displayed by using the external display 200. In other words, the terminal device 100 may perform screen projection by using the external display 200. Generally, the external display 200 does not support a touch operation. In other words, the user cannot perform an operation on the external display 200 like operating the terminal device having a touch function. For example, as shown in FIG. 3, in this case, a style of a mouse icon (or referred to as a cursor) appears on an interface displayed by the external display 200, so that the user performs an operation on the interface.

Currently, generally, when the mouse icon is moved to an area on an interface displayed by the external display 200, a hover effect does not appear, for example, the foregoing special styles such as highlighting and local transparency do not appear. Currently, regardless of the position to which the mouse icon is moved on the interface displayed by the external display 200, the interface does not change. For example, the style of the mouse icon does not change, and displaying of the hot zone in which the mouse icon is located does not change. As shown in FIG. 3, when the mouse icon is moved to an application interface, the mouse icon does not change, and the application interface does not change. Apparently, when an interface does not change, it is difficult for the user to view a position to which the mouse icon is moved at the first time, and the user cannot accurately learn a position of a hot zone that is to be clicked, which causes serious impact on use by the user.

Therefore, this application provides a display method. A screen projection desktop of a terminal device is displayed by using an external display, and when a mouse icon on the desktop is moved to an application interface on the screen projection desktop, an operating system is used to change a hover effect of the application interface and/or change a mouse icon on the application interface. Changing the hover effect of the application interface and the mouse icon allows the user to clearly view the position to which the mouse is moved, so as to perform a more accurate operation, thereby enhancing visual experience of the user.

The following describes in detail technical solutions in embodiments of this application with reference to the accompanying drawings in embodiments of this application.

FIG. 4 is a schematic diagram of a display system architecture according to an embodiment of this application.

As shown in FIG. 4, this application provides a display system architecture. It may be understood that the system is applied to the terminal device 100 shown in FIG. 1 and FIG. 2. The architecture includes an application (application, app) layer, a framework (framework) layer, and a kernel layer. The application layer includes a screen projection app. It may be understood that the screen projection app is used to implement intelligent screen projection. For example, after the terminal device 100 is connected to the external display 200 in a wired or wireless manner, after the user starts the screen projection app, the terminal device 100 may display a desktop of the terminal device 100 by using the external display 200. In some examples, the terminal device 100 may perform screen projection in a mirroring manner. It may be understood that a screen projection manner is not limited in this application.

The framework layer includes a view system (view system) and a screen projection service (service). The screen projection service is used to implement a corresponding screen projection operation. The view system is used to implement a view-related operation. For example, the view system may be used to measure a size of each user interface (user interface, UI) element, determine a position of each UI, perform redrawing when content changes, receive a view (view)-related event, allocate a view-related event, and process a callback related to a window status. The screen projection app at the app layer invokes the screen projection service at the framework layer by using an application programming interface (application programming interface, API) dedicated to the screen projection service. The screen projection service determines, by using a view system, a corresponding view on a desktop that needs to be displayed, and generates a screen projection desktop that needs to be displayed by the external display 200. When the mouse icon on the screen projection desktop is moved to the application interface on the screen projection desktop, the view system is used to determine to change a hover effect of the application interface and/or change the mouse icon on the application interface, and perform redrawing. Then, a redrawn view is transferred to the screen projection service, so that the screen projection service transfers, by using a corresponding driver, a redrawn screen projection desktop to the external display 200 for display. This ensures that the user can clearly view the position to which the mouse is moved, so as to perform a more accurate operation, thereby enhancing visual experience of the user.

The kernel layer includes peripheral drivers such as a mouse driver, a keyboard driver, and an external display driver. It may be understood that, each driver located at the kernel layer is used to obtain operation information of a corresponding peripheral and send an instruction or information to control the corresponding peripheral, for example, a click operation of a mouse, a keystroke operation of a keyboard, and display control of a display. In other words, the kernel layer is used to implement interaction between a virtual screen projection app and a physical peripheral entity.

For example, in this application, after an interface of the terminal device 100 is displayed by using the external display 200, the screen projection app of the terminal device first invokes the screen projection service by using the dedicated API, and the screen projection service sends a desktop generation instruction to the view system, so that the view system generates the screen projection desktop. The external display 200 usually does not have a touch function. Therefore, the user needs to implement a corresponding operation by using a mouse 300. For example, an operation on the screen projection desktop is implemented by using the mouse 300. In this case, the mouse driver at the kernel layer may obtain a movement operation, a click operation, and/or a scroll wheel operation on the mouse 300. Certainly, the click operation of the user on a keyboard 400 may also be obtained by using the keyboard driver. Then, each driver at the kernel layer transfers obtained hardware operation information to the screen projection service at the framework layer, and the screen projection service transfers the hardware operation information to the view system, and determines, by using the view system, whether a currently displayed view needs to be redrawn, that is, determines hover effects to be displayed. That is, a new screen projection desktop is redrawn. Then, the screen projection application at the app layer transfers, by using the screen projection service, a desktop (that is, a newly generated screen projection desktop) that displays a hover effect to the external display 200 for display. Certainly, a display process may be that the screen projection app invokes the screen projection service by using a dedicated API, and then the screen projection service sends an instruction for generating a desktop to the view system, so as to generate the screen projection desktop. Then, the screen projection service receives the screen projection desktop generated by the view system, transfers data including the screen projection desktop to the external display driver at the kernel layer, and controls, by using the external display driver, the external display 200 to display the corresponding screen projection desktop. The user can intuitively view, by using the external display 200, the screen projection desktop of the terminal device 100 and a hover effect displayed on the screen projection desktop.

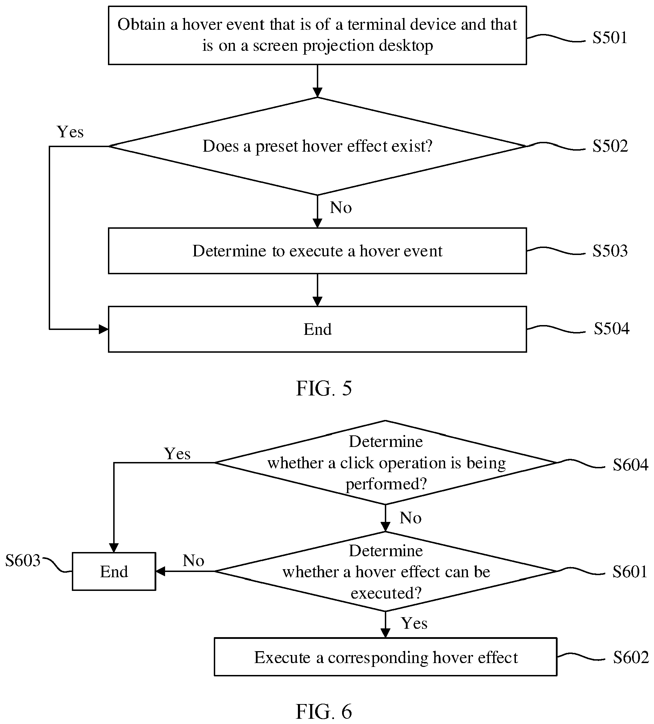

FIG. 5 is a flowchart of a display method according to an embodiment of this application.

As shown in FIG. 5, this application provides a flowchart of a display method. The method is applied to the terminal device 100 described in FIG. 1, FIG. 2, and FIG. 4, and the system shown in FIG. 4. The terminal device 100 may include but is not limited to any terminal device or portable terminal device such as a mobile phone, a smart television, a smart speaker, a wearable device, a tablet computer, a desktop computer, an all-in-one computer, a handheld computer, a notebook computer, an ultra-mobile personal computer (ultra-mobile personal computer, UMPC), a netbook, a personal digital assistant (personal digital assistant, PDA), a laptop (laptop) computer, a mobile computer, an augmented reality (augmented reality, AR) device, a virtual reality (virtual reality, VR) device, an artificial intelligence (artificial intelligence, AI) device, and/or a vehicle-mounted device.

The terminal device 100 is connected to the external display 200 in a wired or wireless manner. The wireless manner may include wireless communication solutions such as 2G/3G/4G/5G/6G. Alternatively, the wireless manner includes wireless communication solutions such as a wireless local area network (wireless local area network, WLAN), Bluetooth (Bluetooth, BT), a global navigation satellite system (global navigation satellite system, GNSS), frequency modulation (frequency modulation, FM), a near field communication (near field communication, NFC) technology, ZigBee (ZigBee), and an infrared (infrared, IR) technology. The WLAN may be, for example, a wireless fidelity (wireless fidelity, Wi-Fi) network.

The terminal device 100 includes a screen projection desktop. It may be understood that the screen projection desktop may be displayed on the external display 200. A screen projection application and at least one other application may be further run on the terminal device. It may be understood that the another application may be any application other than the screen projection application on the terminal device. The method may include the following steps.

S501: Obtain a hover event (event) that is of the terminal device and that is on the screen projection desktop.

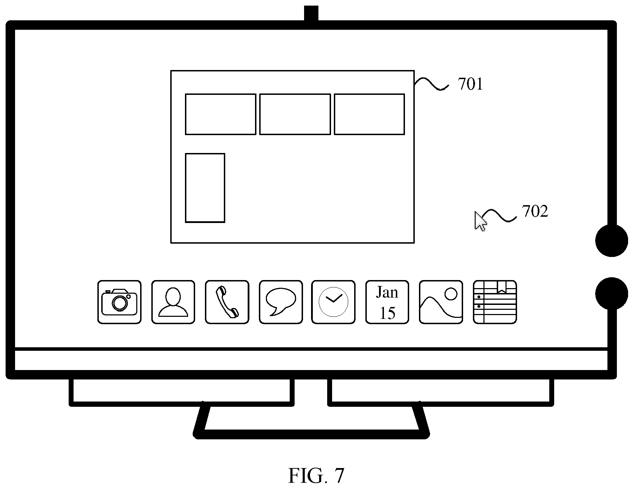

First, the terminal device may obtain the hover event on the screen projection desktop displayed by the external display. The screen projection desktop may include an application interface and a mouse icon, and the application interface is an interface corresponding to any other application. As shown in FIG. 7, the screen projection desktop displayed by the external display includes an application interface 701 and a mouse icon 702. In an example, there may be one or more application interfaces 701. Generally, there is only one mouse icon 702. A user may implement a corresponding operation by controlling movement of the mouse icon 702. The application interface 701 may be understood as the foregoing control.

In some examples, after the terminal device 100 is connected to the external display 200 in a wired or wireless manner, the user may perform screen projection by using the screen projection application on the terminal device. In this case, the terminal device 100 may generate a screen projection desktop, and send the screen projection desktop to the external display 200 for display. This process may be considered as a process in which the terminal device performs screen projection. In some examples, the terminal device 100 may perform screen projection in a mirroring manner, and may transmit an output of a source end (that is, the terminal device 100) to a receive end (that is, the external display 200) in real time for display. According to different actual situations, screen projection may be performed in a same-source or different-source manner. A difference is as follows: The same-source screen projection is screen projection of a native display desktop of the terminal device 100, while the different-source screen projection is that the terminal device 100 generates a screen projection desktop independent of the native display desktop, and screen projection is performed on the newly generated screen projection desktop.

After detecting, by using a driver at the kernel layer, that the mouse is moved, the terminal device may determine, by using the screen projection service at the framework layer based on a position to which the mouse is moved, whether a hover event is generated. For example, when a cursor is moved to an application interface, it may be considered that a hover event is generated. After determining that the hover event is generated, the screen projection service may send the hover event to a view system, so that the view system performs a view-related operation. It may be understood that the application interface 701 may be considered as a view. In some examples, if the application interface 701 includes a subview (or referred to as a subinterface), each subview (that is, an image on the application interface 701) is used as a view, and the application interface 701 may be considered as an Android view group (view group). As shown in FIG. 7, the application interface 701 is used as a view group, and each image (that is, a box on the application interface 701 in the figure) on the application interface 701 is used as a view.

In some examples, at a system level, an implementation process of S501 may be represented by using "dispatchHoverEvent", which means to dispatch a hover event.

S502: Determine whether a preset hover effect exists.

The view system in the terminal device 100 determines whether a current hover event has a corresponding preset hover effect. If the view system determines that the current hover event has the corresponding preset hover effect, S504 is performed to end the procedure; or if the view system determines that the current hover event does not have the corresponding preset hover effect, the view system performs S503.

In some examples, some application developers have corresponding development capabilities, and therefore may preconfigure a corresponding hover effect for a corresponding application. Therefore, when the view system detects that the current hover event has the preset hover effect, the view system may directly execute the corresponding hover effect, and perform S504.

In an example, at the system level, an implementation process of S502 may be represented by using "mOnHoverListener", where m represents a member variable, that is, whether a hover event with a preset hover effect is detected.

S503: Determine to execute a dedicated hover event.

If the view system determines that the current hover event does not have the corresponding preset hover effect, the view system may execute the dedicated hover event in this application.

In some examples, at the system level, an implementation process of S503 may be represented by using "OnHoverEvent", indicating that the dedicated hover event is executed. The dedicated hover event in this application may be determining, for each view and/or each subview, editable text, and image, whether to perform a preconfigured hover effect, for example, changing transparency, adding a border, adding a mask, bolding a text, changing a text color, changing a font size, changing a text tilt angle, and/or adding an underline.

S504: End.

After the terminal device executes the dedicated hover event and displays the corresponding hover effect in S503, the procedure may be ended.

FIG. 6 is a flowchart of another display method according to an embodiment of this application.

As shown in FIG. 6, this application further provides a flowchart of another display method. The procedure may be considered as a more detailed execution process of S503 in FIG. 5.

S503 may specifically include the following steps.

S601: Determine whether a hover effect can be executed.

A view system determines whether a preset hover effect can be executed currently. If the hover effect can be executed for the current hover event, S602 is performed. If the hover effect cannot be executed for the current hover event, S603 is performed to end the procedure.

In some examples, determining whether to execute a hover effect may be determined by determining whether the hover effect can be executed for the current hover event and whether the hover effect has been executed. At a system level, "isHoverable()" may be used to determine whether the hover effect can be executed on a view in which the hover event is currently generated, that is, whether the hover effect can be implemented on the view in which the hover event is currently generated; and "isHovered()" may be used to determine whether the hover effect has been executed on the view in which the hover event is currently generated, which may also be understood as whether hover has been executed on the view in which the hover event is currently generated. If either or both of "isHoverable()" and "isHovered()" is/are "true (true)", that is, "isHoverable()" or "isHovered()" is "true", S602 may be performed; or if neither "isHoverable()" nor "isHovered()" is "true", S603 is performed. For example, at the system level, "isHoverable() ∥ isHovered()" may be used for representation, where "∥" represents logical OR.

It may be understood that, "isHoverable()" and "isHovered()" are two predefined function methods, and are respectively used to indicate whether hover can be executed and whether the hover effect has been executed.

In an example, for "isHoverable()", the "isHoverable()" function method may be defined for different interface types. For example, for a view of a general type, a parent class function may be defined. In this function, "isEnabled()" may be defined to determine whether the hover effect can be executed on a current view. For example, when it is determined that execution of a hover effect is enabled for the current view, it may be determined that the hover effect can be executed on the current view; or when it is determined that execution of a hover effect is disabled for the current view, it may be determined that the hover effect cannot be executed on the current view. Certainly, in some examples, it may be further determined whether the current view is clickable (click), or whether the current view is long-clickable, or whether the current view is context-clickable, or whether data obtained by the hover listener (listener) is obtained. If a return value is "true" or " 1 ", the hover effect can be executed on the current view. Otherwise, if the current view is not clickable, not long-clickable, and not context-clickable, and the hover listener does not obtain any listened data, it may be determined that the hover effect cannot be executed on the current view.

Certainly, in some examples, the parent class function may be rewritten, and the parent class function may be inherited, so as to implement a hover effect a view of a text type and a view group. For example, for a view of the text type, the view system may determine a current text is in an editing state, to determine whether the hover effect can be executed on the view. If the current view is being edited and an input method manager is activated, it is considered that the hover effect can be executed on the current view. On the contrary, if the current view is not being edited or the input method manager is not activated, it may be considered that the hover effect can be executed on the current view. In some other examples, if the current view is not being edited or the input method manager is not activated, it may be further determined whether a text in the current view includes a hyperlink. For example, if it is determined that the current view includes a hyperlink, it may be determined that the hover effect cannot be executed on the view. Otherwise, if the current view does not include a hyperlink, it may be considered that the hover effect can be executed on the current view.

In still another example, for a case of a view group, that is, a case in which a plurality of layers of subviews are nested in a view, determining may be performed layer by layer. For example, determining is performed based on the subviews at each layer, to determine whether a hover effect can be executed on the view group. Determining may be performed on each subview in the foregoing manner of determining a view of a general type. Certainly, an appropriate determining manner may also be redefined according to an actual situation. This is not limited herein in this application.

S602: Execute a corresponding hover effect.

If the view system determines that the hover effect can be executed for the current hover event, the view system executes the corresponding hover effect based on the current hover event.

In an example, for example, a hover effect of an application interface may be changed, and/or a mouse icon on the application interface may be changed. In this way, a user can intuitively view a current position of a mouse icon and an area that can be operated, thereby improving visual experience of the user.

In an example, the hover effect of the application interface is changed. For example, transparency of a view of an image type is changed, for example, adding a border and adding a mask; or a hover effect of a view of a text type is changed, for example, bolding a text, changing a text color, changing a font size, changing a text tilt angle, and/or adding an underline. In another example, the mouse icon on the application interface is changed. For example, the mouse icon may be changed to a small hand icon, the mouse icon may be changed to a vertical line, and/or a size of the mouse icon may be changed.

S603: End.

It may be understood that S603 is the same as step S504, and details are not described herein again.

Certainly, in some optional examples, before S601, it may be further determined whether a click operation is being performed on the current view, so as to avoid a waste of resources caused by execution of a hover effect when a user is performing the click operation. Therefore, before S601, the following steps may be further included.

S604: Determine whether a click operation is being performed.

The view system can determine whether a click operation is being performed. If a click operation is being performed, the corresponding click operation may be directly performed, and S603 is performed to end the procedure. If no click operation is being performed currently, S601 may continue to be performed.

In some examples, this step can ensure that a subsequent hover effect is not displayed if a click operation is performed in a short time, thereby avoiding unnecessary system overheads and saving computing resources. In some cases, a user may perform an operation very quickly, that is, directly click on a corresponding application interface 701. In this case, calculating a hover effect of the corresponding application interface 701 will generate unnecessary resource consumption. Therefore, in this case, the terminal device may directly perform a corresponding click operation, and no longer display the hover effect.

Certainly, it may be understood that S604 is an optional step, that is, in some cases, S604 may not be performed, but S601 is directly performed.

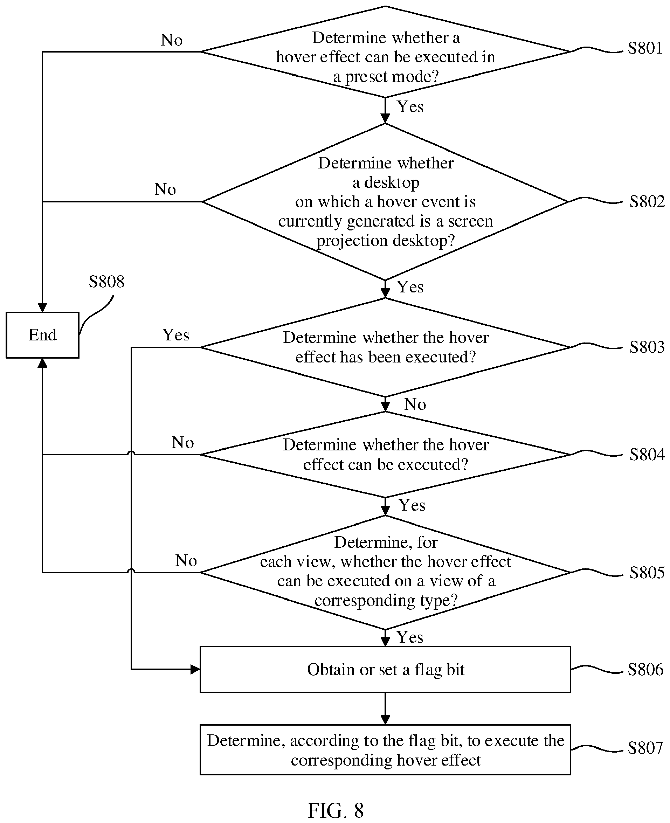

FIG. 8 is a flowchart of still another display method according to an embodiment of this application.

As shown in FIG. 8, this application further provides another display method. The method may be a specific implementation process of S602 in FIG. 6. As described in FIG. 8, after it is determined that a hover effect can be executed on a current view, a check (check) may be performed in a preset mode, for example, various attributes of the current view are checked to determine a to-be-executed hover effect.

For example, the view system may first determine that a terminal device is currently in the preset mode, for example, a preconfigured PC mode (mode). In the PC mode, the current view is checked, and a corresponding hover effect is executed. Certainly, in another example, the preset mode may be any other mode. It may be understood that, in this application, after the terminal device 100 is connected to the external display 200, because the external display 200 usually does not have a touch function, when the user performs an operation on a screen projection desktop displayed on the external display 200, for example, performs an operation by using a peripheral such as a mouse or a keyboard, it may be considered that the terminal device 100 is in the PC mode.

In an example, at the system level, the foregoing implementation process may be represented by using "checkAndDoHoverInPcMode".

The process may specifically include the following steps.

S801: Determine whether a hover effect can be executed in the preset mode.

The view system determines whether the hover effect can be executed in the preset mode (for example, the PC mode). In some examples, determining may be performed by determining a preset function method used for determining whether the hover effect can be executed in the preset mode. The function method may be, for example, "checkHoverableInPcMode()". In some examples, a return value of the function may be of a Boolean type (Boolean). For example, if the return value is 1, it indicates "true"; and if the return value is 0, it indicates "false". If it is determined that the hover effect can be executed in the preset mode, S802 continues to be performed; or if it is determined that the hover effect cannot be executed in the preset mode, S808 is performed to end the procedure.

It may be understood that a definition of the function may be randomly set according to an actual situation. For example, "isHoverable()" is used to check whether a hover effect can be executed on a current view in the PC mode. For a specific determining manner of "isHoverable()", refer to the description in S601. Details are not described herein again.

In an example, S801 is used to determine whether a hover effect can be executed on an application interface 701 on which a mouse icon 702 is located. The application interface 701 is a view (or referred to as a control) in which the mouse icon 702 is located. The control may be any control shown in FIG. 1.

S802: Determine whether a desktop on which a hover event is currently generated is a screen projection desktop.

The view system determines whether the desktop on which the hover event is generated is a screen projection desktop. In other words, it is determined whether the currently generated hover event is from the screen projection desktop. For example, when the terminal device 100 generates the hover event, desktop information may be carried, and the information indicates a desktop on which the hover event is generated. The terminal device 100 may determine, by using the desktop information carried in the hover event, whether the hover effect is from the screen projection desktop. Certainly, alternatively, the terminal device 100 may determine whether a source of the hover event is the screen projection desktop. For example, it is determined whether the obtained hover event is obtained from the screen projection desktop. Certainly, in another example, another equivalent manner may be used to determine whether the desktop on which the hover event is currently generated is the screen projection desktop. This is not limited in this application.

In an example, a desktop generated by the terminal device 100 may be referred to as a display. A screen projection desktop newly generated by the terminal device 100 may be referred to as a productive (productive) display. Therefore, the view system determines whether a current hover event is generated on the productive desktop, to determine whether to execute a subsequent hover effect. If it is determined that the desktop on which the hover event is currently generated is a screen projection desktop (that is, a productive desktop), subsequent step S803 is performed; or if it is determined that the desktop on which the hover event is currently generated is not a screen projection desktop, S808 is performed to end the procedure.

In an example, at a system level, an implementation process of S703 may be represented by using "isInProductivePCDisplay()". It may be understood that the function method is mainly used to isolate a feature of an external display, so as to more accurately identify whether a desktop on which a hover event is currently generated is a screen projection desktop displayed on the external display. In another example, different external displays are defined in the function, so that this application can adapt to different external displays.

It may be understood that this process is mainly used to prevent the terminal device from performing a dedicated hover effect for an event generated on a native desktop.

S803: Determine whether the hover effect has been executed on the view in which the hover event is currently generated.

The view system determines whether the effect has been executed on the view in which the hover event is currently generated.

In some examples, at the system level, a predefined "isHovered()" may be used for implementation. For example, the return value of this function method is used to determine whether the effect has been executed on the view in which the hover event is generated. If a return value of "isHovered ()" indicates "true", S806 may be directly performed; or if a return value of "isHovered()" indicates "false", S804 continues to be performed.

In an example, each time a hover effect is executed on each view, a record may be kept. For example, for each view, "isHovered()" is used to determine whether a record of executing the hover effect is kept for the view. If a record is kept, it may be determined that the return value indicates "true" (that is, "true" or " 1" is returned); or if no record is kept, it may be determined that the return value indicates "false" (that is, "false" or "0" is returned).

It may be understood that, S803 is an optional step. When S803 is performed, if it is determined that the hover effect has been executed, previously stored status data may be directly used, and a same hover effect can be executed again based on the status data, thereby reducing system overheads and time overheads generated when S804 and S805 are performed. Certainly, in some examples, S803 may not be performed, and S804 may be directly performed. Such a case means that each time a hover event for which a hover effect can be executed is generated, status data corresponding to the current hover event needs to be recalculated and determined, and a corresponding hover effect is determined based on the status data.

S804: Determine whether the hover effect can be executed on the view in which the hover event is currently generated.

The view system determines whether the effect can be executed on the view in which the hover event is currently generated. If it is determined that the hover effect can be executed on the view in which the hover event is currently generated, S805 continues to be performed; or if it is determined that the hover effect cannot be executed on the view in which the hover event is currently generated, S808 is performed to end the procedure. For example, it may be determined, based on a general attribute, whether the hover effect can be executed on the view in which the hover event is currently generated. It may be understood that the view in which the hover event is currently generated is a view (or referred to as a control) in which the mouse icon is located after the mouse icon is moved.

In an example, a flag (flag) may be set, and the flag is used to record whether a hover effect can be executed on a view in which the hover event is currently generated. For example, the flag can be defined as a Boolean type.

In an example, the view system can check whether the view in which the hover event is currently generated is valid (valid). For example, the view system can check whether the view in which the hover event is currently generated is accessible (visible), whether the view is enabled (enable), and/or whether the view is a stub (stub). Checking whether the view in which the hover event is currently generated is enabled may also be understood as checking the view in which the hover event is currently generated is used. In addition, a purpose of checking whether a view is a stub is to check whether an invalid stub placeholder view whose view class name is directly defined as "view" exists. If the view is a stub, it is considered that the view is invalid. When any one of the foregoing check results is "false (false)", it is considered that the view in which the hover event is currently generated is invalid, and it is determined that the view in which the hover event is currently generated does not meet a basic condition for executing hover. In an example, at the system level, "checkViewValid(view)" may be used for representation.

It may be understood that, when it is determined whether the view in which the hover event is currently generated is valid, a corresponding parameter may be generally obtained, for example, an access parameter (which is used to check whether the view is accessible), an enable parameter (which is used to check whether the view is enabled), and a stub parameter (which is used to check whether the view in which the hover event is currently generated is an invalid stub), so as to determine whether the view in which the hover event is currently generated meets the basic condition for executing hover.

In another example, the view system may further check an area of the view in which the hover event is currently generated. For example, when the area is greater than a preset area threshold, it is considered that the hover effect cannot be executed on the view in which the hover event is currently generated. In an example, at the system level, "checkViewRectSize(view)" may be used for representation.

In still another example, the terminal device 100 may further preset a first list and/or a second list. For example, the first list may be a whitelist, and the second list may be a blacklist. In this way, the view system can determine that a hover effect cannot be executed on a view in the blacklist, while a hover effect can be executed on a view in the whitelist. It may be understood that a purpose of setting the blacklist is to avoid adverse impact that may be caused when the hover effect is executed on some views, for example, a display exception, invalid display, or another problem that affects visual experience of a user. Such views will be added to the blacklist, so that the terminal device 100 does not subsequently execute a hover effect on the views added to the blacklist. On the contrary, a good user experience is provided when a hover effect is executed on some views, and therefore such views may be added to the whitelist. In this way, when subsequently determining that a view is in the whitelist, the terminal device 100 determines that a hover effect can be executed on the view.

Therefore, if the view system detects and determines that the view in which the hover event is currently generated is in the blacklist, it may be directly considered that the hover effect cannot be executed on the view in which the hover event is currently generated; or if the view system detects and determines that the view in which the hover event is currently generated is in the whitelist, it may be directly considered that the hover effect can be executed on the view in which the hover event is currently generated.

In an example, at the system level, a determining process of S804 may be represented by using "isViewHoverableInner(view, axisX, axisY)". A return value of this function may be of a Boolean type. "axisX" and "axisY" indicate relative coordinates of the view in which the hover event is currently generated. In an example, a value of "isViewHoverableInner(view, axisX, axisY)" may be assigned to a flag, so as to record whether a hover effect can be executed on a view whose coordinates are (X, Y) (that is, the view in which the hover event is currently generated).

S805: Determine, for each view, whether a hover effect can be executed on a view of a corresponding type.

If it is determined, in S804, that the hover effect can be executed on the view in which the hover event is currently generated, the view system may further determine, for each view, whether the hover effect can be executed on views of different interface types. The view in which the hover event is currently generated is a view (or referred to as a control) in which the mouse icon is located after the mouse icon is moved. Certainly, if there is a subview, the subview may also be understood as a subcontrol included in a control shown in FIG. 1.

For example, it may be determined, based on specific interface types of views, whether a hover effect can be executed on views of different interface types. In an example, for example, at the system level, the "isHoverable(float axisX, float axisY)" function method of the Boolean type may be defined to indicate whether a hover effect can be executed on each subview. Generally, "1" (or "true") may be used to indicate that the hover effect can be executed, and "0" (or "false") may be used to indicate that the hover effect cannot be executed.

Interface types of views may be classified into a general type and a text (text) type. In some other examples, a plurality of layers of subviews may be further nested in a view. Compared with a lower-layer subview, an upper-layer view may be referred to as a view group. Views of the general type may include views of an image type.

In some examples, for a view of a general type, the view system may first determine whether the view is enabled. At the system level, the "isEnabled()" function method may be used for representation. It may be understood that determining whether the view is enabled herein may be implemented in the same manner as described in S804. If a return value of "isEnabled()" is "false", it is considered that the hover effect cannot be executed on the view. Certainly, if the return value of "isEnabled()" is "true", it may be further determined whether the view is clickable (click). For example, at the system level, "isClickable()" is used for representation. For example, a parameter may be preset to indicate whether the view is clickable, and the parameter is obtained by using "isClickable()". In addition, it may be determined whether the view is long-clickable. For example, at the system level, determining may be performed by using "isLongClickable()" and "getListenerInfo().mOnLongClickListener". When the values of "isLongClickable" and "getListenerInfo().mOnLongClickListener" are both "true", it may be considered that the view is long-clickable, and it is determined that the hover effect can be executed on the view. For example, a parameter may be preset to indicate whether the view is long-clickable, and the parameter is obtained by using "isLongClickable()" and/or "getListenerInfo().mOnLongClickListener". It may be further determined whether the view is context-clickable. For example, at the system level, determining may be performed by using "isContextClickable()" and "getListenerInfo().mOnContextClickListener". If the values of "isContextClickable" and "getListenerInfo().mOnContextClickListener" are both "true", it may be considered that the view is context-clickable, and it is considered that the hover effect can be executed on the view. For example, a parameter may be preset to indicate whether the view is context-clickable, and the parameter is obtained by using "isContextClickable()" and/or "getListenerInfo().mOnContextClickListener".

Certainly, in some examples, it may be further determined whether data listened by the hover listener is obtained. It may be understood that, if a hover effect is preconfigured, the hover listener obtains the information, that is, a value of the hover listener is not null (null). At the system level, "getListenerInfo().mOnHoverListener" may be used for representation. For example, developers of some applications pre-configure hover effects. It may be understood that, although a corresponding hover effect is executed in S502 if it is determined that a preset hover effect exists, in some cases, if corresponding views of some applications allow execution of hover effects other than preset hover effects, even if hover effects are preset for such applications, this solution can still be executed, and dedicated hover effects in this application can still be presented. Therefore, it may be considered that a hover effect can be executed on the view after hover is detected. Certainly, in some examples, it may be further determined whether data detected by a touch (touch) listener is obtained. For example, at the system level, "getListenerInfo().mOnTouchListener" may be used for representation. For example, if a touch hover effect is preconfigured, when it is detected that "getListenerInfo().mOnTouchListener" is not null, it may be determined that the hover effect can be executed on the view.

It may be understood that any one of "isClickableU", " isLongClickable()&&getListenerInfo().mOnLongClickListener", " isContextClickable&&getListenerInfo().mOnContextClickListener", "getListenerInfo().mOnHoverListener", or "getListenerInfo().mOnTouchListener" may be used as a return value of " isHoverable(float axisX, float axisY)", that is, return (isClickable()) ∥ (isLongClickable()&&getListenerInfo().mOnLongClickListener! =null) || (isContextClickable&&getListenerInfo().mOnContextClickListener! =null) ∥ getListenerInfo().mOnHoverListener! =null ∥ getListenerInfo().mOnTouchListener! =null. "∥" indicates logical OR. "!="indicates being unequal.

Certainly, in some other examples, for a view of a text type, the view system may determine whether the current text is in an editing state, to determine that a hover effect can be determined on the view. For example, it is determined whether editing is being performed and whether an input method manager is activated. At the system level, "isTextEditable()&&getInputMethodManager().isActive (view: this)" may be used for representation. It may be understood that the first half "isTextEditable()" indicates whether a current text is being edited. For example, a parameter used to represent an editing status of the current text may be obtained, and it may be determined, by using the parameter, whether the current text is being edited. The second half "getInputMethodManager().isActive (view: this) indicates whether the input method manager is activated in the current view. For example, the terminal device 100 detects that the input method manager is currently started, or the input method manager is not started. If a value of "isTextEditable()&&getInputMethodManager().isActive (view: this)" is "true", it is considered that editing is performed on the current view and no hover effect can be executed. Therefore, it may be determined that the hover effect cannot be executed on the view. In an example, it may be further determined whether the text in the current view includes a hyperlink. For example, it is determined whether the current view is jumpable (that is, linked to another interface) and whether the link is clickable. At the system level, "mSpannable!=null && mLinksClickable" may be used for representation. The first half is "mSpannable! =null" indicates that the current view is jumpable. The second half "mLinksClickable" indicates whether a link is clickable. A parameter indicating whether the link is clickable may be preconfigured, and the parameter may be obtained by using "mLinksClickable". If a value of "mSpannable! =null && mLinksClickable" is "true", it is considered that the current view includes a hyperlink and no hover effect can be executed. Therefore, it may be determined that the hover effect cannot be executed on the view.

In some other examples, if a plurality of layers of subviews are nested in a view, determining may be performed layer by layer. For example, determining may be performed on a view group at each layer, to determine whether a hover effect can be executed on the view group. For example, at the system level, the "isViewGroupHoverable(this)" function method may be inherited. For example, a view group may carry a parameter indicating whether the view group is hoverable, and the parameter is obtained by using "isViewGroupHoverable(this)", to determine whether the hover effect can be executed on the current view group. If a value of "isViewGroupHoverable(this)" is "false", it is considered that the hover effect cannot be executed on the view group. In addition, it may be considered that the hover effect cannot be executed on the current view. If the value of "isViewGroupHoverable(this)" is "true", it is considered that the hover effect can be executed on the view group. Then a parent class function, that is, the foregoing determining process for a view of a general type, is performed. For ease of description, details are not described herein again.

In some other examples, for a case in which a plurality of layers of subviews are nested in a view, because a computing capability is limited in an actual application, the foregoing determining may not be performed for each layer of nested subviews when a nesting depth is high. A recursive traversal depth (depth) may be preset. That is, a depth threshold is set, so that when the traversal depth reaches the depth threshold, deeper traversal is not performed. In this manner, unnecessary system calculation overheads can be effectively reduced. In an example, for example, the depth threshold may be set to 7, that is, a maximum of seven layers of nested subviews are traversed. For example, "checkAllValidChildCounInner" of the Boolean type may be defined to recursively traverse a plurality of layers nested subviews. In some examples, "getTotalValidChildCount()" may be used to determine a depth of traversing a plurality of layers nested subviews. It may be understood that "getTotalValidChildCount()" may be used to determine an actual nesting depth of any view group whose depth is less than 7.

The status data in S803 may include "isViewHoverable()" in S804 and "isHoverable(X, Y)" in S805.

S806: Obtain or set a flag bit.

The view system can obtain or set a flag bit. The flag bit is used to record the foregoing status data, that is, the configuration information. The status data that is of a view and that is recorded in the flag bit is determined, so as to perform S807 to implement the corresponding hover effect.

In an example, if the hover effect has been executed on the view in which the hover event is currently generated, the status data that is of the view and that has been calculated and recorded when the hover effect is performed previously may be obtained. For example, when S806 is directly performed after S803, S806 is used to obtain a flag bit that has been historically recorded. If S806 is performed after S804 and S805, a new flag bit may be set according to the status data obtained through calculation in S804 and S805. In this way, when the hover effect is executed on the view again next time, the recorded flag bit may be directly invoked to execute the corresponding hover effect, so as to reduce unnecessary calculation overheads.

In some examples, a return value of the flag bit may be determined according to values of "isViewHoverable()" and "isHoverable(X, Y)". In an example, the return value of the "isViewHoverable()" function may be set to a flag, which is used as a flag bit. After the terminal device determines the view in which the hover event is currently generated, the return value of the function may be used to avoid re-determining whether the hover effect can be executed on the current view each time. This reduces unnecessary calculation overheads, and ensures that performance of the terminal device is not affected when the hover effect is frequently triggered. In an example, for example, it may be first determined whether the view has a corresponding flag value, and whether it has been checked whether a hover effect can be executed. If both values are "true", "true" can be returned; or if either of the values is not "true", a flag of the Boolean type may be defined, and the value of "isViewHoverableInnerU" may be assigned to the flag.

The return value of "isViewHoverableInner()" may be "isHoverable(X, Y)". Certainly, in some examples, "isViewHoverableInner()" may be further used to determine whether the current view is valid, whether an area proportion is excessively large (for example, exceeds a preset area threshold), whether the current view is in a blacklist, or whether the current view is in a whitelist, so as to avoid an invalid or abnormal hover effect. For example, if it is determined that the current view is invalid, an area proportion is excessively large (for example, exceeds a preset area threshold), or the current view is in the blacklist, "false" or "0" may be directly set as a return value. In this way, invalid or abnormal hover effects are avoided. Certainly, in another example, a determining condition may be further added, deleted, or modified according to an actual situation. This is not limited in this application.

Certainly, in some examples, it may be further determined whether a status of the current view needs to be updated. If the status of the current view does not need to be updated, a historically stored flag value may be obtained and returned.

S807: Determine, according to the flag bit, to execute the corresponding hover effect.

The view system determines, based on the flag bits obtained or set in S806, that is, "isViewHoverable()" and "isHoverable(X, Y)", that the hover effect can be executed on the view in which the hover event is currently generated. Then, different hover effects are implemented based on the type of the view.

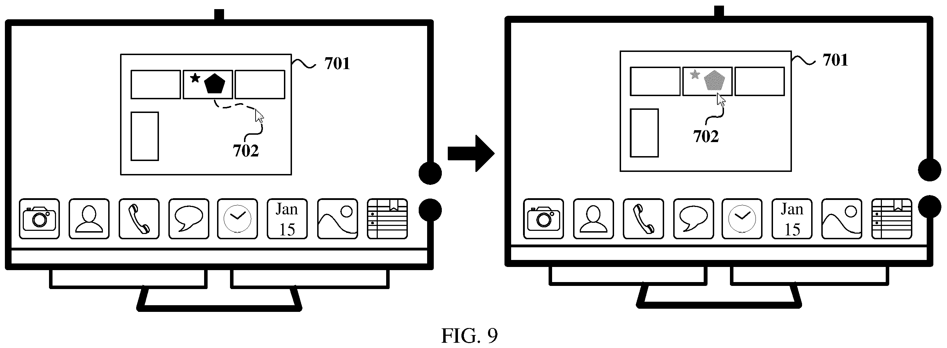

In an example, a view of a general type may be of an image (image) type or a custom type. If the view in which the hover event is currently generated is of an image type, transparency of an image in the view may be changed, a border may be added around the image, and/or a mask may be added to the image. The transparency may be represented by using an alpha (alpha) value. It may be learned from the screen projection desktop shown in FIG. 9 that the left half part shows that before the mouse icon 702 is moved to the view of the image type, an image on the view is properly displayed. When the mouse icon 702 moves along the dashed line to the view of the image type, transparency of the view may be changed, for example, the transparency is set to first transparency for display. In this way, the user can intuitively view a current position to which the mouse is moved and a hot zone in which the mouse is located. It may be understood that the hot zone described in this application may be considered as an area to which the mouse is moved to implement a hover effect.

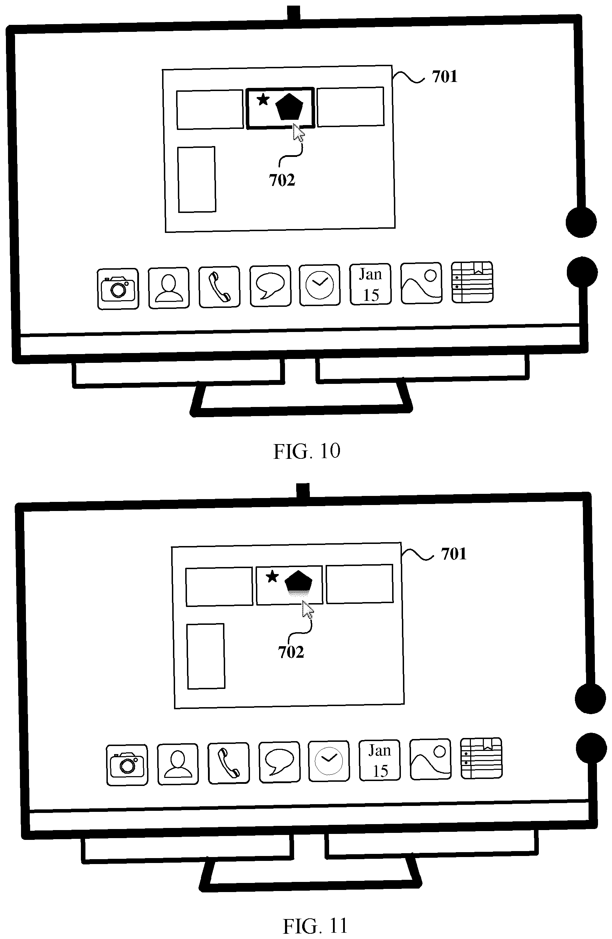

As shown in FIG. 10, another hover effect is shown, that is, a thicker border is added around a view in which the hover event is currently generated, so that the user can more intuitively identify the current view. FIG. 11 shows a hover effect after a mask is added. It may be learned that some areas on the view in which the hover event is currently generated are covered or partially covered because a mask is added. With such a hover effect, a user can also intuitively view a current position to which the mouse is moved and a hot zone in which the mouse is located.

It may be understood that, in some solutions, a hover effect may be implemented in any one or more manners in FIG. 9 to FIG. 10. For example, transparency of an image in the view may be changed, a border may be added around the image, and a mask may be added to the image.

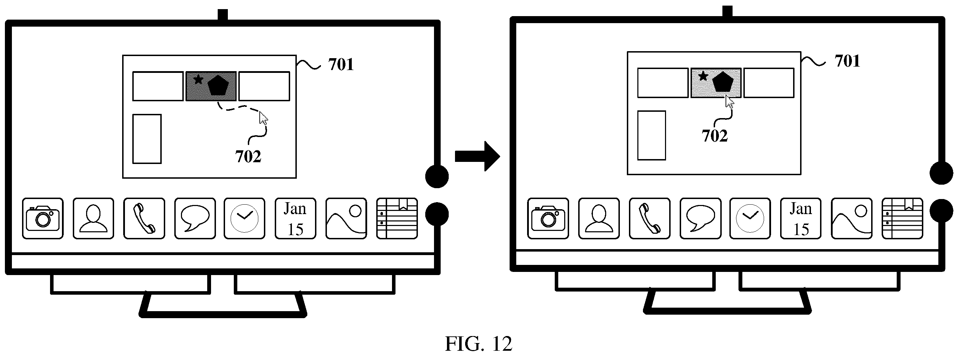

In some examples, for a view of an image type, transparency of an image background (background) may be further changed and/or a mask may be added. For example, as shown in FIG. 12, it may be learned that before the mouse icon 702 is moved to the view of the image type, an image on the view is properly displayed (including an image background). When the mouse icon 702 moves along the dashed line to the view of the image type, transparency of the image background on the view may be changed, for example, the transparency is set to first transparency for display. In this way, the user can view that the transparency of the image background of the image in the view changes, and can intuitively view a current position to which the mouse is moved and a hot zone in which the mouse is located.

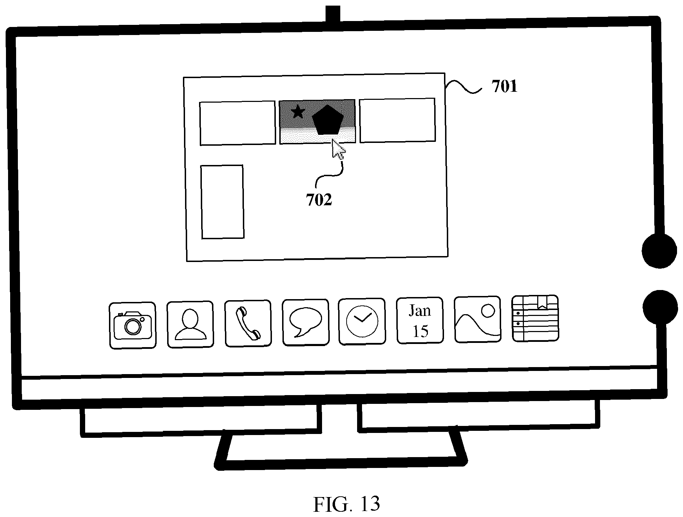

FIG. 13 shows a hover effect after a mask is added to an image background. It may be learned that the image background on the view is covered or partially covered because a mask is added. The user can also view a current position to which the mouse is moved and a hot zone in which the mouse is located.

Certainly, in some examples, after the mouse icon 702 is moved from the view of the image type to another position, the view system performs a reverse operation, that is, restores the view before the hover effect is executed for display. Therefore, in an example, when determining to execute the foregoing hover effect, the view system may record transparency, border information, and mask information before the change, to ensure that restoration may be performed after the hover effect is implemented.

It may be understood that the parameter changed when the hover effect is implemented may be obtained by the terminal device 100 through calculation according to an actual situation, or may be obtained through calculation according to a preconfigured algorithm.

In an example, for a view of a custom type, a corresponding hover effect may be implemented according to a user-defined parameter setting, for example, user-defined transparency is used, or a specific border, mask, or texture is added. It may be understood that a changed parameter in the custom type may be set according to a preference of the user of the terminal device 100. For a specific implementation process, refer to the descriptions about the view of the image type. The difference lies only in that the changed parameter is not determined by the terminal device 100, but is set by the user.

It may be understood that more possible hover effects may be added according to an actual situation. The foregoing hover effects are merely examples for description, and are not limited in this application.

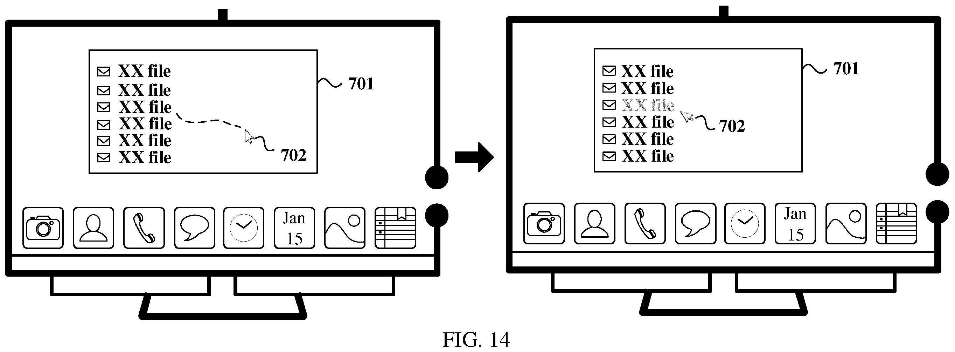

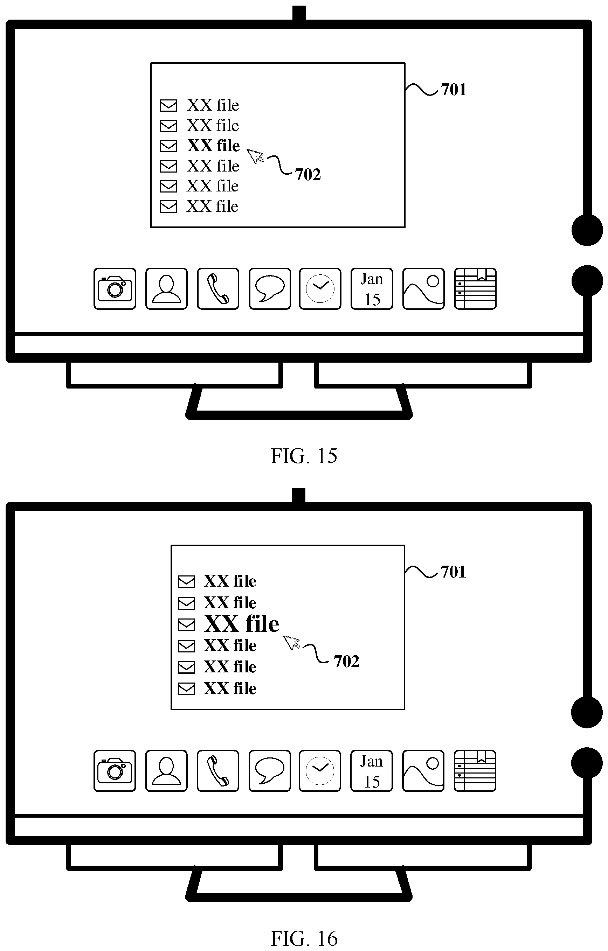

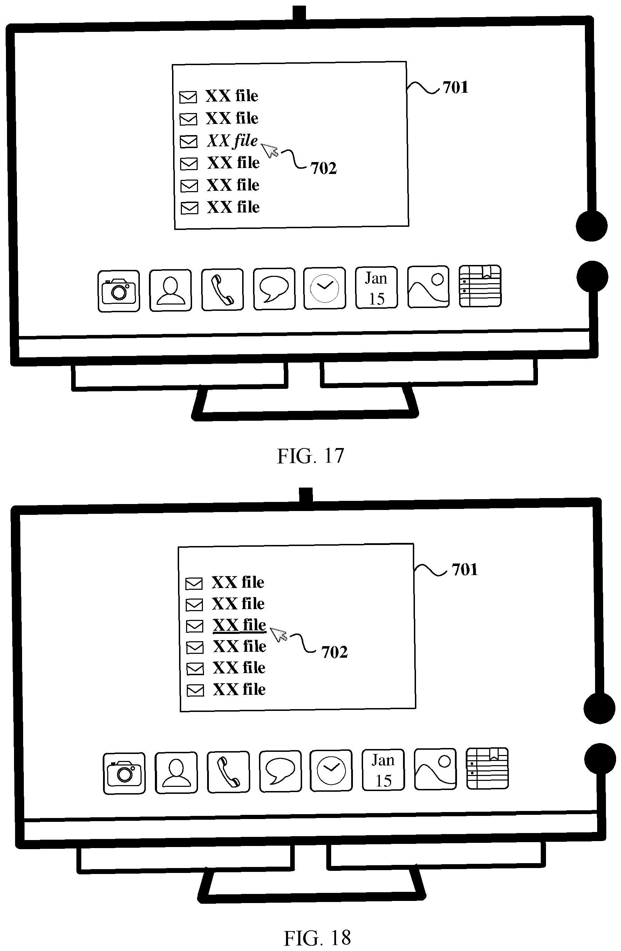

In some examples, for a view of a text type, a font color, a font weight, a font size, a tilt angle, and/or an underline in the text may be changed. In this way, the user can more intuitively view a current position to which the mouse is moved and a hot zone in which the mouse is located. As shown in FIG. 14, the left half part shows that before the mouse icon 702 is moved to the view of the text type, the text on the view is properly displayed. When the mouse icon 702 moves along the dashed line to the view of the text type, the color of the text in the view may be changed. For example, "XX file" in the third row shown in the right half part becomes red or another color (displayed in gray in the figure). In this way, the user can intuitively view a current position to which the mouse is moved and a hot zone in which the mouse is located. In some other examples, as shown in FIG. 15, "XX file" in the third row in which the mouse icon 702 is located may be bolded. Alternatively, as shown in FIG. 16, in some examples, a font size of "XX file" in the third row in which the mouse icon 702 is located is increased, to increase visual prominence. Alternatively, in some examples, as shown in FIG. 17, a font of "XX file" in the third row in which the mouse icon 702 is located may be changed to be italic. Alternatively, in some examples, as shown in FIG. 18, an underline may be added to a font of "XX file" in the third row in which the mouse icon 702 is located.

It may be understood that more manners of modifying the text may be further included as display hover effects. This is not limited in this application. Apparently, the purposes of all the foregoing implementations of the hover effect are to enable the user to visually view the current position to which the mouse is moved and the hot zone in which the mouse is located.

In some examples, for a view of the text type, after the mouse icon 702 is moved from the view of the text type to another position, the view system may perform a reverse operation, that is, restore the view before the hover effect is executed for display.

In some examples, at the system level, the foregoing execution of the hover effect on a corresponding view may be defined as the "onHoverChange" function method. If the view system determines that the current view does not meet the condition described above, the hover effect cannot be executed.

In some examples, if a view in which the hover event is currently generated is used as a view group, that is, includes a plurality of layers of nested subviews, it may be determined that the hover effect is executed according to a preset condition. For example, it may be determined whether the current view group includes a subview and whether the hover effect can be executed on the subview. For example, the preset condition may be as follows: If the view group includes only a subview and the hover effect can be executed on the subview, the hover effect is not executed on the view group, but the hover effect is executed on the selected subview. For another example, when a quantity of subviews on which the hover effect can be executed reaches a preset quantity, the hover effect may be implemented by using the subviews. For example, the preset condition may alternatively be as follows: A ratio of a quantity of subviews on which the hover effect can be executed to a quantity of all subviews in the view group is determined, for example, a ratio threshold may be set. The ratio threshold may be a percentage of subviews on which the hover effect can be executed, or a quantity of subviews on which the hover effect can be executed. When a percentage of the subviews on which the hover effect can be executed reaches the ratio threshold, the hover effect is executed on the selected subviews, and the hover effect is not executed on the view group; or when a percentage of the subviews on which the hover effect can be executed does not reach the ratio threshold, the hover effect is executed on the selected view group, and the hover effect is not executed on the subviews. It may be understood that, in an actual application, a percentage is usually used for calculation.

It may be understood that, in S807, the corresponding hover effect may be implemented on the view of the text type or the view of the general type according to a parameter preset by the user, and various parameters generated before the hover effect is displayed may also be recorded for restoration after the hover effect is displayed.

S808: End.

It may be understood that S808 is the same as S504 and S603, and details are not described herein again.

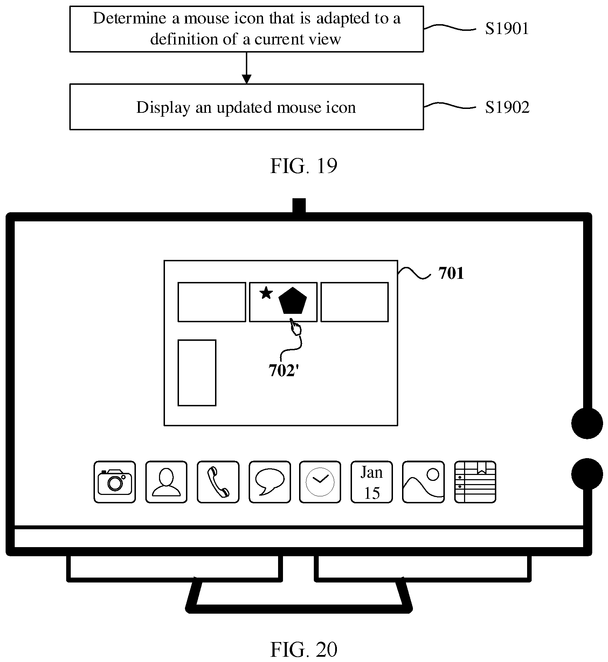

FIG. 19 is a flowchart of still another display method according to an embodiment of this application.

As shown in FIG. 19, this application provides still another display method. The method is mainly used to update a mouse icon. For example, a view system may determine whether a current mouse icon needs to be changed, and when the mouse icon is moved to an application interface 701 on which a hover effect can be implemented, update of the mouse icon may be triggered. In an example, at a system level, "ViewRootmpl.updatePointerIcon" may be used for representation.

A specific implementation process of S602 may further include the following steps.

S1901: Determine a mouse icon that is adapted to a definition of a current view.

After the view system determines to trigger the update of the mouse icon, the mouse icon style defined by the current view may be adapted to change the current mouse icon.

In an example, if it may be determined that the current view is clickable or another event can be executed on the current view, the mouse icon may be replaced with a small hand icon. It may be determined, by using "isClickable()&&isEnabled()" whether the current view is clickable and enabled. If a return value of "isClickable()&&isEnabled()" is "true", the mouse icon may be replaced with the small hand icon. For example, as shown in FIG. 20, an image on the application interface 701 is clickable and enabled, and the mouse icon 702 is replaced with the small hand icon 702'. It may be understood that, similarly, for example, a sliding bar is also clickable and enabled. Therefore, when there is a sliding bar in the view, the mouse icon 702 is replaced with the small hand icon 702' when being moved to a position of the sliding bar.

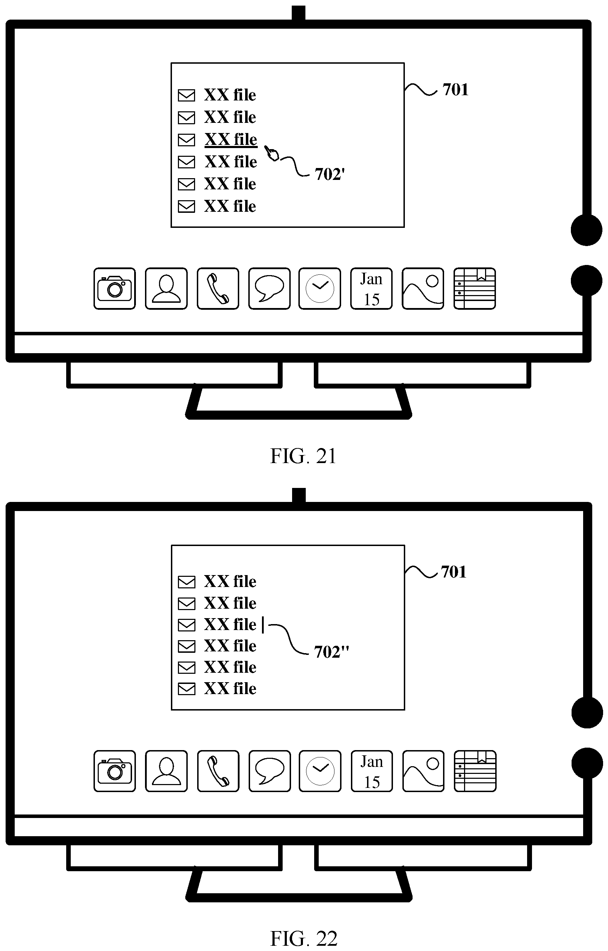

In some other examples, for a view of a text type, if a text includes a hyperlink, the mouse icon 702 may be replaced with the small hand icon 702' when being moved to a position of the hyperlink. If the text is in an editable state or in a text selectable state, the mouse icon 702 will be replaced with a vertical line for display. FIG. 21 shows a case in which a text includes a hyperlink. It may be understood that, in FIG. 21, an underline is added to identify a jumpable hyperlink. In another example, the jumpable hyperlink may be identified by using a different color or in another visual manner. This is not limited in this application. FIG. 22 shows a screen projection desktop in an editing state or a text selection state. It may be learned that the mouse icon 702 is replaced with a vertical line 702".

It may be understood that changing a style of the mouse icon is also executing a hover effect. Therefore, in some examples, a corresponding parameter value used for executing the foregoing hover effect may be recorded and stored by using "isHover". When a common scenario occurs again, the stored "isHover" may be invoked to execute the corresponding hover effect.

In some cases, if a view in which the hover event is currently generated is used as a view group, that is, includes a plurality of layers of nested subviews, traversal may be performed layer by layer until a view in which a hover effect of the mouse icon can be executed is found, and the foregoing hover effect is displayed on the view (that is, the mouse icon is changed to a small hand icon or a vertical line). If there is no view in which the hover effect of the mouse icon can be executed, the style of the mouse icon 702 does not change.

In an example, the "onResolvePointerIcon" function method may be defined to implement the changed hover effect of the mouse icon. For example, if the hover effect or a hyperlink can be implemented, the mouse icon may be replaced with the small hand icon; or if the hover effect or the hyperlink cannot be implemented, a native mouse style of a system can be implemented.

S 1902: Display an updated mouse icon.

After it is determined to change the mouse icon 702 in S1901, a changed icon, that is, a small hand icon 702' or a vertical line 702', is displayed.

In this application, the screen projection desktop of the terminal device is displayed by using the external display, and when the mouse icon on the desktop is moved to the application interface on the desktop, the display style of the application interface is changed, and/or the mouse icon on the application interface is changed. Changing the display style of the application interface and the mouse icon allows the user to clearly view the position to which the mouse is moved, so as to perform a more accurate operation, thereby enhancing visual experience of the user, and significantly and effectively improving the user's experience of performing a mouse operation.

The hover effects described in FIG. 4 to FIG. 18 and the hover effects of the mouse icon described in FIG. 19 to FIG. 22 may be implemented in the manners in the foregoing embodiments. For a specific implementation process, refer to corresponding descriptions in FIG. 4 to FIG. 22. Details are not described herein again in this application.

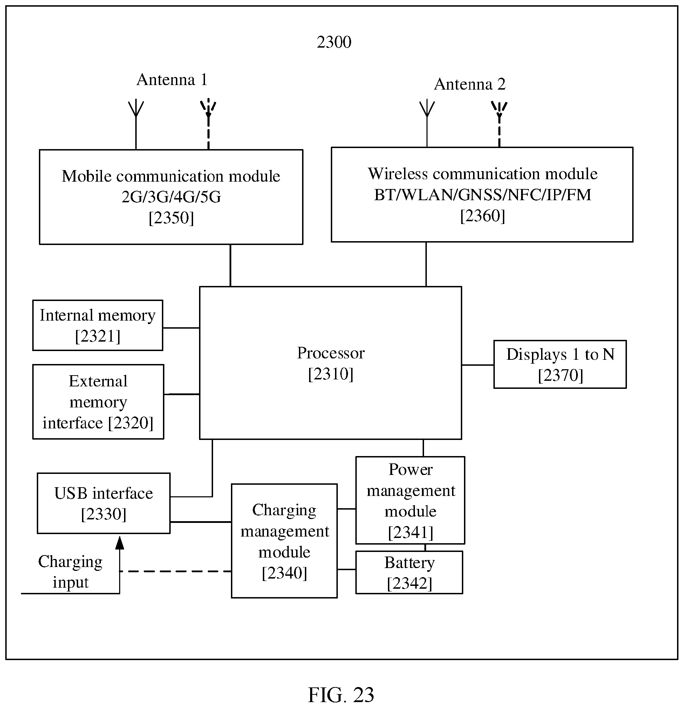

FIG. 23 is a schematic diagram of a terminal device according to an embodiment of this application.

As shown in FIG. 23, this application further provides a terminal device 2300. The apparatus terminal device 2300 may be the terminal device 100 described in FIG. 1 to FIG. 22. The terminal device 2300 may include a processor 2310, an external memory interface 2320, an internal memory 2321, a universal serial bus (universal serial bus, USB) interface 2330, a charging management module 2340, a power management module 2341, a battery 2342, an antenna 1, an antenna 2, a mobile communication module 2350, a wireless communication module 2360, a display 2370, and the like.

It may be understood that the structure illustrated in this embodiment of this application does not impose a specific limitation on the terminal device 2300. The terminal device 2300 may include more or fewer components than those shown in the figure, or some components may be combined, or some components may be split, or there may be a different component arrangement. The components shown in the figure may be implemented by hardware, software, or a combination of software and hardware.

The processor 2310 may be a processor with an advanced reduced instruction set computing machines (advanced reduced instruction set computing machines, ARM) architecture, an X86 processor, a microprocessor without interlocked piped stages (microprocessor without interlocked piped stages, MIPS), or the like. The processor 2310 may include one or more processing units, for example, an application processor (application processor, AP), a modem processor, a GPU, an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to control instruction reading and instruction execution.

A memory may be further disposed in the processor 2310, and is configured to store instructions and data. In some embodiments, the memory in the processor 2310 is a cache. The memory may store instructions or data just used or cyclically used by the processor 2310. If the processor 2310 needs to use the instructions or the data again, the processor 2310 may directly invoke the instructions or the data from the memory. This avoids repeated access and reduces waiting time of the processor 2310, thereby improving system efficiency.

In some embodiments, the processor 2310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an operating system of the terminal device in this application is stored in the memory, and the processor 2310 invokes the operating system stored in the memory to implement the methods described in FIG. 4 to FIG. 22.

The charging management module 2340 is configured to receive a charging input from a charger. The charger may be a wireless charger or a wired charger.

In some embodiments of wired charging, the charging management module 2340 may receive a charging input of a wired charger through the USB interface 2330. In some embodiments of wireless charging, the charging management module 2340 may receive a wireless charging input through a wireless charging coil of the terminal device 2300. The charging management module 2340 may further supply power to the terminal device 2300 through the power management module 2341 while charging the battery 2342.

A wireless communication function of the terminal device 2300 may be implemented through the antenna 1, the antenna 2, the mobile communication module 2350, the wireless communication module 2360, the modem processor, the baseband processor, and the like.

The mobile communication module 2350 may provide a wireless communication solution that is applied to the terminal device 2300, including 2G/3G/4G/5G/6G and the like. The wireless communication module 2360 may provide a wireless communication solution that is applied to the terminal device 2300, including WLAN, BT, GNSS, FM, NFC, ZigBee, IR, and the like. The WLAN may be, for example, a Wi-Fi network.

It may be understood that, in the foregoing wireless manner, the terminal device 2300 may be connected to the external display 200. Certainly, the connection may also be implemented in a wired manner.

The terminal device 2300 implements a display function by using the GPU, the display 2370, the application processor, and the like. The GPU is a microprocessor for image processing, and is connected to the display 2370 and the application processor. The GPU is configured to perform mathematical and geometric computation, and render an image. The processor 2310 may include one or more GPUs that execute program instructions to generate or change display information.

The display 2370 is configured to display an image, a video, and the like. The display 2370 includes a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini LED, a micro LED, a micro OLED, quantum dot light emitting diodes (quantum dot light emitting diodes, QLED), or the like. In some embodiments, the terminal device 2300 may include one or N displays 2370, where N is a positive integer greater than 1.

In some examples, the external display may also use the foregoing LCD, OLED, AMOLED, FLED, mini LED, micro LED, micro OLED, QLED, or the like.

The external memory interface 2320 may be configured to connect to an external memory card, for example, a micro SD card, to extend a storage capability of the terminal device 2300. The external memory card communicates with the processor 2310 through the external memory interface 2320, to implement a data storage function. For example, files such as music and a video are stored in the external memory card.

The internal memory 2321 may be configured to store computer-executable program code, and the executable program code includes instructions. The internal memory 2321 may include a program storage area and a data storage area. The program storage area may store an operating system, an application required by at least one function, and the like The data storage area may store data created during use of the terminal device 2300. In addition, the internal memory 2321 may include a high-speed random access memory, or may include a nonvolatile memory such as at least one disk storage device, a flash memory device, or a universal flash storage (universal flash storage, UFS). The processor 2310 performs various function applications and data processing of the terminal device 2300 by running the instructions stored in the internal memory 2321 and/or the instructions stored in the memory disposed in the processor.

The terminal device 2300 provided in this application may implement any one of the methods described in FIG. 4 to FIG. 22. For a specific implementation, refer to corresponding descriptions in FIG. 4 to FIG. 22. Details are not described herein again.

In this application, a layout of a view in which a mouse icon is located is identified, and different hover effects are implemented according to different types of views, where a hover effect of an application interface may be determined and/or a style of the mouse icon may be changed. Therefore, a position to which the user moves the mouse and a hot zone selected by the user by using a mouse can be visually displayed, thereby enhancing visual experience of the user.

Further, in this application, a blacklist and a whitelist are set, so that an implemented hover effect will not cause any adverse effect.

Further, in this application, the configuration information is recorded by setting a flag bit. In this way, the same hover effect can be quickly executed again for the view on which the hover effect has been executed. This ensures that the performance does not deteriorate when the hover event is triggered frequently.

A person of ordinary skill in the art should be aware that units and algorithm steps in the examples described with reference to the embodiments disclosed in this specification can be implemented by electronic hardware, computer software, or a combination of computer software and electronic hardware. To clearly illustrate interchangeability of hardware and software, various illustrative components and steps have been described above generally in terms of functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person of ordinary skill in the art may understand that all or some of the steps in the foregoing methods of the embodiments may be implemented by a program instructing a processor. The foregoing program may be stored in a computer-readable storage medium. The storage medium may be a non-transitory (English: non-transitory) medium, such as a random access memory, a read-only memory, a flash memory, a hard disk, a solid state drive, a magnetic tape (English: magnetic tape), a floppy disk (English: floppy disk), an optical disc (English: optical disc), or any combination thereof.

The foregoing descriptions are merely examples of specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A display method, wherein the method is applied to an operating system of a terminal device, a screen projection application and at least one other application are run on the terminal device, the terminal device is connected to an external display in a wired or wireless manner, and the method comprises:
determining a screen projection desktop according to a screen projection desktop generation request of the screen projection application, wherein the screen projection desktop comprises an application interface and a mouse icon, and the application interface is an interface corresponding to any other application; and
sending, by using the screen projection application, the screen projection desktop to the external display for display; and
the method further comprises:
when the mouse icon is moved to the application interface, determining whether a hover effect can be executed on the application interface;
when the hover effect can be executed on the application interface, determining an interface type of the application interface, and executing, on the screen projection desktop, a hover effect corresponding to the interface type; and/or
when the hover effect can be executed on the application interface, changing the mouse icon on the clickable application interface.

2. The method according to claim 1, wherein the method further comprises:
generating configuration information of the application interface, wherein the configuration information indicates whether the hover effect can be executed on the application interface;
recording the configuration information; and
when the mouse icon is moved to the application interface again, executing, by the operating system, the hover effect corresponding to the interface type and/or changing the mouse icon based on the configuration information.

3. The method according to claim 2, wherein before the determining whether a hover effect can be executed on the application interface, the method further comprises:
obtaining the configuration information recorded last time; and
when the configuration information indicates that the hover effect can be executed on the application interface, executing, on the screen projection desktop, the hover effect corresponding to the interface type, and/or changing the mouse icon on the clickable application interface.

4. The method according to any one of claims 1 to 3, wherein the determining whether a hover effect can be executed on the application interface comprises:
obtaining an access parameter; and when the access parameter indicates that the application interface is accessible, determining that the hover effect can be executed on the application interface; and/or
obtaining an enable parameter; and when the enable parameter indicates that the application interface is enabled, determining that the hover effect can be executed on the application interface; and/or
obtaining a stub parameter; and when the stub parameter indicates that the application interface is not an invalid stub, determining that the hover effect can be executed on the application interface.

5. The method according to claim 4, wherein the determining whether a hover effect can be executed on the application interface further comprises:
determining whether an area of the application interface is less than or equal to an area threshold; and
when the area of the application interface is less than or equal to the area threshold, determining that the hover effect can be executed on the application interface.

6. The method according to claim 4 or 5, wherein the determining whether a hover effect can be executed on the application interface further comprises:
determining whether the application interface is comprised in a preset first list, and/or determining whether the application interface is comprised in a preset second list; and
when the application interface is comprised in the preset first list or the application interface is not comprised in the preset second list, determining that the hover effect can be executed on the application interface.

7. The method according to any one of claims 1 to 6, wherein the determining whether a hover effect can be executed on the application interface comprises:
when the interface type of the application interface is a non-text type, obtaining the enable parameter;
when the enable parameter indicates that the application interface is enabled, determining whether the application interface is clickable, or determining whether the application interface is long-clickable, or determining whether the application interface is context-clickable, or determining whether a hover listener obtains listened data, or determining whether a touch listener obtains listened data; and
when the application interface is clickable, or the application interface is long-clickable, or the application interface is context-clickable, or the hover listener obtains the listened data, or the touch listener obtains the listened data, determining that the hover effect can be executed on the application interface.

8. The method according to any one of claims 1 to 7, wherein the determining whether a hover effect can be executed on the application interface comprises:
when the interface type of the application interface is a text type, determining whether editing is performed on the application interface, and determining whether an input method manager is started on the application interface;
when editing is not performed on the application interface or no input method manager is started on the application interface, determining whether a hyperlink used for jumping to a page exists on the application interface; and
when no hyperlink used for jumping to a page exists on the application interface, determining that the hover effect can be executed on the application interface.

9. The method according to any one of claims 1 to 8, wherein the application interface comprises at least one nested subinterface; and
the determining whether a hover effect can be executed on the application interface comprises:
when a quantity of subinterfaces that can display the hover effect is greater than a preset threshold, determining that the hover effect can be executed on the subinterface, and executing the hover effect or changing the mouse icon on the subinterface; or
when a quantity of subinterfaces that can display the hover effect is less than or equal to a preset threshold, determining that the hover effect can be executed on the application interface.

10. The method according to any one of claims 1 to 9, wherein before the determining whether a hover effect can be executed on the application interface, the method further comprises:
obtaining a mode execution parameter; and
when the mode execution parameter indicates that the hover effect can be executed in a preset mode, determining whether the hover effect can be executed on the application interface.

11. The method according to any one of claims 1 to 10, wherein when the interface type is an image type, the executing the hover effect corresponding to the interface type comprises:
determining to display an image with first transparency; and/or
determining to add a border around the image for display; and/or
determining to add a mask to the image for display.

12. The method according to any one of claims 1 to 11, wherein when the interface type is the text type, the executing the hover effect corresponding to the interface type comprises:
determining a color, a font weight, a font size, a tilt angle, and/or an underline of a text on the application interface.

13. The method according to any one of claims 1 to 12, wherein the changing the mouse icon comprises: replacing the mouse icon with a small hand icon.

14. A terminal device, wherein the terminal device comprises an operating system and a screen projection application, the terminal device is connected to an external display in a wired or wireless manner, and the terminal device comprises:
a processor, configured to be coupled to a memory, and read and execute instructions stored in the memory, wherein
when the processor runs, the instructions are executed, so that the processor is configured to perform the method according to any one of claims 1 to 13.

15. A computer-readable storage medium, wherein the computer-readable storage medium stores instructions, and when the instructions are run on a terminal, the terminal is enabled to perform the method according to any one of claims 1 to 13.

16. A computer device comprising instructions, wherein when the computer device runs on a terminal, the terminal is enabled to perform the method according to any one of claims 1 to 13.
